# EUROPEAN PATENT APPLICATION

(11) **EP 4 807 232 A1**
(43) Date of publication of application: **16.09.2026**
(21) Application number: 24891414.5
(22) Date of filing: 12.11.2024
(51) Int. Cl.: F16L 59/14

(54) **PIPING FOR LOW-TEMPERATURE FLUID**

(30) Priority: 14.11.2023 US 202363548435 P
(71) Applicant: KAWASAKI JUKOGYO KABUSHIKI KAISHA, Kobe-shi, Hyogo 650-8670 (JP)
(72) Inventor: KUYAMA, Hiroki, Hyogo 650-8670 (JP); SASAKI, Koichi, Hyogo 650-8670 (JP); SHIMIZU, Kazuko, Hyogo 650-8670 (JP); TSURU, Kazunari, Hyogo 650-8670 (JP); AIBA, Yosuke, Hyogo 650-8670 (JP); YAMAUCHI, Seiji, Hyogo 650-8670 (JP)
(74) Representative: Bals & Vogel Patentanwälte PartGmbB
(86) International application number: PCT/JP2024/040211
(87) International publication number: WO 2025/105378

(57) **Abstract**

A low-temperature fluid pipe includes a pipe body, an end seal, a heat insulation layer, and a gas barrier. The pipe body is formed from a metal and carries a low-temperature fluid. The end seal protrudes radially outward from an outer peripheral surface of the pipe body. The heat insulation layer surrounds the pipe body and includes a layer end facing the end seal. The gas barrier surrounds the heat insulation layer and includes a heat seal joint heat-sealed to the end seal.

## Description

### FIELD

The present disclosure relates to a low-temperature fluid pipe that transports a low-temperature fluid.

### BACKGROUND

Pipes that carry low-temperature fluids are insulated. For example, a pipe that carries liquid hydrogen is wrapped with a heat insulator, which is then covered with a gas barrier. The heat insulator reduces the entry of heat into the pipe. The gas barrier restricts the entry of outside air into the heat insulator, thus reducing liquefaction of air.

The pipe has an exposed terminal end or an exposed intermediate connecting portion not covered with the heat insulation layer. The exposed portion of the pipe is covered with an end seal attached to the end of the heat insulator as described in, for example, Patent Literature 1. The end seal reduces the entry of outside air into the heat insulator through the end of the heat insulator. The sealing performance of the end seal is to be maintained over a long period. However, the end seal and a component in contact with the end seal may have different thermal contractions that can cause breakage or a gap, thus degrading the sealing performance of the end seal.

### CITATION LIST

### PATENT LITERATURE

Patent Literature 1: Japanese Unexamined Utility Model Application Publication No. 54-63259

### SUMMARY OF THE INVENTION

One or more aspects of the present disclosure are directed to a low-temperature fluid pipe that can maintain the sealing performance of an end seal.

A low-temperature fluid pipe according to one aspect of the present disclosure includes a pipe body that is formed from a metal and carries a low-temperature fluid, an end seal protruding radially outward from an outer peripheral surface of the pipe body, a heat insulation layer surrounding the pipe body and including a layer end facing the end seal, and a gas barrier surrounding the heat insulation layer and including a heat seal joint heat-sealed to the end seal.

### ADVANTAGEOUS EFFECTS

The low-temperature fluid pipe according to the above aspect of the present disclosure can maintain the sealing performance of the end seal.

### DRAWINGS

FIG. 1 is a sectional view of a low-temperature fluid pipe according to a first embodiment of the present disclosure.
FIG. 2 is a perspective view of the low-temperature fluid pipe in FIG. 1.
FIG. 3 is a sectional view of a heat seal joint between an end seal and a gas barrier, with an enlarged sectional view of the heat seal joint.
FIG. 4 is a perspective view illustrating an example of fabrication processes of the gas barrier.
FIG. 5A is a perspective view illustrating another example of fabrication processes of the gas barrier.
FIG. 5B is a sectional view taken along line VB-VB in FIG. 5A.
FIG. 6 is a sectional view of a low-temperature fluid pipe according to a second embodiment of the present disclosure.
FIG. 7 is a sectional view of a low-temperature fluid pipe according to a third embodiment of the present disclosure.
FIG. 8 is a sectional view of a low-temperature fluid pipe according to a fourth embodiment of the present disclosure.

### DETAILED DESCRIPTION

A low-temperature fluid pipe according to one or more embodiments of the present disclosure will be described below in detail with reference to the drawings. The low-temperature fluid pipe according to one or more embodiments of the present disclosure is, for example, a pipe that transports a low-temperature fluid. Examples of the low-temperature fluid include a liquefied natural gas (LNG) or a cryogenic fluid having a lower liquefaction temperature than LNG. A cryogenic fluid has a temperature range that causes ambient air to liquefy or oxygen or nitrogen contained in the ambient air to liquefy. The cryogenic fluid is, for example, liquid hydrogen or liquid helium. The cryogenic fluid may be, for example, a hydrogen gas or a helium gas in the cryogenic temperature range.

### First Embodiment

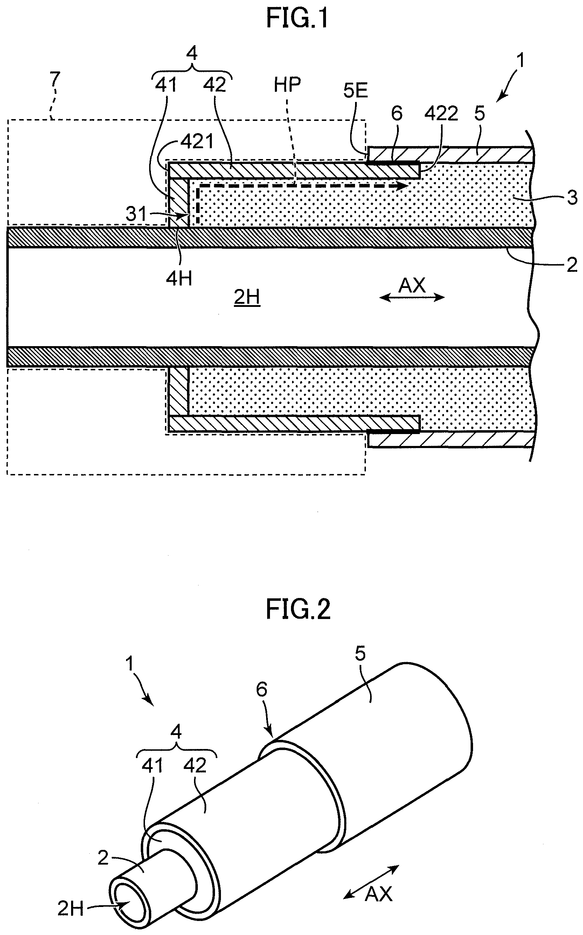

FIG. 1 is a sectional view of a low-temperature fluid pipe 1 according to a first embodiment of the present disclosure. FIG. 2 is a perspective view of the low-temperature fluid pipe 1 in FIG. 1. The low-temperature fluid pipe 1 includes a pipe body 2, a heat insulation layer 3, an end seal 4, and a gas barrier 5. The gas barrier 5 includes a heat seal joint 6. The pipe body 2 is covered with the heat insulation layer 3. The heat insulation layer 3 is covered with the gas barrier 5.

### Components of Low-temperature Fluid Pipe

FIGs. 1 and 2 show a terminal end of the low-temperature fluid pipe 1 that is to be intermediately connected or terminated. At the terminal end, the pipe body 2 is exposed from the heat insulation layer 3 in a pipe axis direction AX for a predetermined length. At the terminal end, the heat insulation layer 3 has a predetermined portion including a layer end 31, which is the edge of the heat insulation layer 3, exposed in the pipe axis direction AX without being covered with the gas barrier 5. The portion of the heat insulation layer 3 not covered with the gas barrier 5 is covered with the end seal 4. The pipe body 2 and the end seal 4 have their exposed portions covered with a heat insulating cover 7. The heat insulating cover 7 insulates the intermediate connecting portion or the terminal end of the low-temperature fluid pipe 1. The heat insulating cover 7 is detachably attached to the intermediate connecting portion or the terminal end.

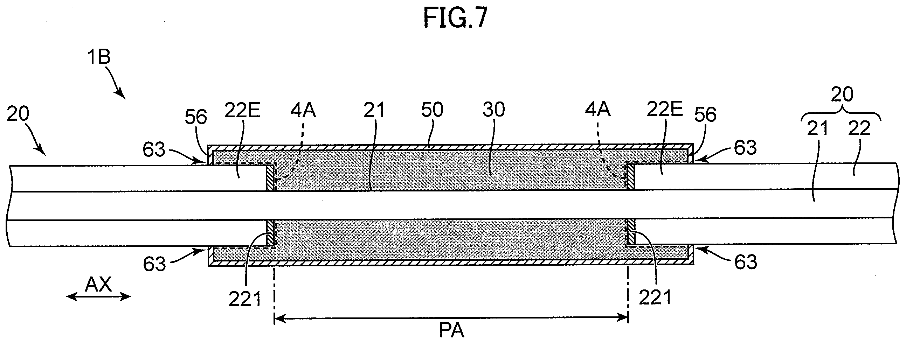

The pipe body 2 is a metal cylinder that transports the low-temperature fluid. The pipe body 2 includes a cylindrical passage 2H sealed inside. The pipe body 2 can be a single-layer pipe formed from, for example, stainless steel or aluminum. The low-temperature fluid transported through the passage 2H in the pipe body 2 is, for example, transferred, stored, or cooled. A vacuum insulated multi-layer pipe may be used particularly for transferring a cryogenic fluid such as liquid hydrogen. As described later in FIG. 7, the present disclosure does not exclude the use of the vacuum insulated multi-layer pipe as the pipe that transports the low-temperature fluid. However, the pipe body 2 as a single-layer metal tube eliminates creation and releasing of the vacuum environment during, for example, connecting or disconnecting the intermediate connecting portion or the terminal end of the low-temperature fluid pipe 1, reducing the fabrication workload. The low-temperature fluid pipe 1 including a single-layer metal tube as the pipe body 2 is lighter than the vacuum insulated multi-layer pipe.

The heat insulation layer 3 surrounds the pipe body 2 to insulate the pipe body 2. The heat insulator for the heat insulation layer 3 may be formed from any material commonly used as a heat insulator. For example, the heat insulator can be formed from a petroleum-based synthetic rubber material such as ethylene propylene rubber, an organic polymeric material such as polyurethane foam or polyethylene foam, a fibrous material such as fiberglass or glass wool, or an inorganic material such as perlite, foam glass, or aerogel. The heat insulation layer 3 may include multiple types of heat insulators or a single type of heat insulator, and may include a material without heat insulating properties. For example, the heat insulation layer 3 may be placed around the pipe body 2 by wrapping a sheet-like heat insulator around the outer circumference of the pipe body 2.

The end seal 4 covers an exposed portion of the heat insulation layer 3 in a portion adjacent to the end of the heat insulation layer 3. The end seal 4 may be formed from, for example, stainless steel or aluminum. The pipe body 2 and the end seal 4 may be formed from the same metal material. This allows the two components to have the same coefficient of thermal expansion, thus reducing the internal stress in the pipe body 2 and the end seal 4 when the temperature changes.

The end seal 4 includes a plate 41 and a cylinder 42. The plate 41 is a disk with a hole 4H through which the pipe body 2 extends. The plate 41 extends radially outward from the pipe body 2. In other words, the plate 41 protrudes radially outward from the outer peripheral surface of the pipe body 2 when attached to the pipe body 2. The heat insulation layer 3 has a cross section serving as the layer end 31 that faces and is parallel to the plate 41. The plate 41 is in contact with the layer end 31. In the present embodiment, the plate 41 is welded to the outer peripheral surface of the pipe body 2. More specifically, the plate 41 has the periphery of the hole 4H welded to the pipe body 2 extending through the hole 4H. The plate 41 may be formed integrally with the pipe body 2 by, for example, machining.

The cylinder 42 extends in the pipe axis direction AX of the pipe body 2 to surround the pipe body 2. The cylinder 42 covers the heat insulation layer 3 for a predetermined length in the pipe axis direction AX from the layer end 31. The cylinder 42 includes a first end 421 adjacent to the plate 41 and a second end 422 adjacent to an edge 5E of the gas barrier 5. In the present embodiment, the inner peripheral surface of the first end 421 is welded to the outer peripheral surface of the plate 41. The inner peripheral surface of the first end 421 that is welded may be in a first end portion including the first end 421 and an area adjacent to the first end 421. The cylinder 42 may be formed integrally with the plate 41 by, for example, machining. The second end 422 is located beyond the edge 5E of the gas barrier 5 and inward from the gas barrier 5 in the direction from the plate 41 toward the gas barrier 5 parallel to the pipe axis direction AX. The second end 422 is thus received in the gas barrier 5. A second end portion including the second end 422 and an area adjacent to the second end 422 and overlapping the gas barrier 5 is heat-sealed to the gas barrier 5.

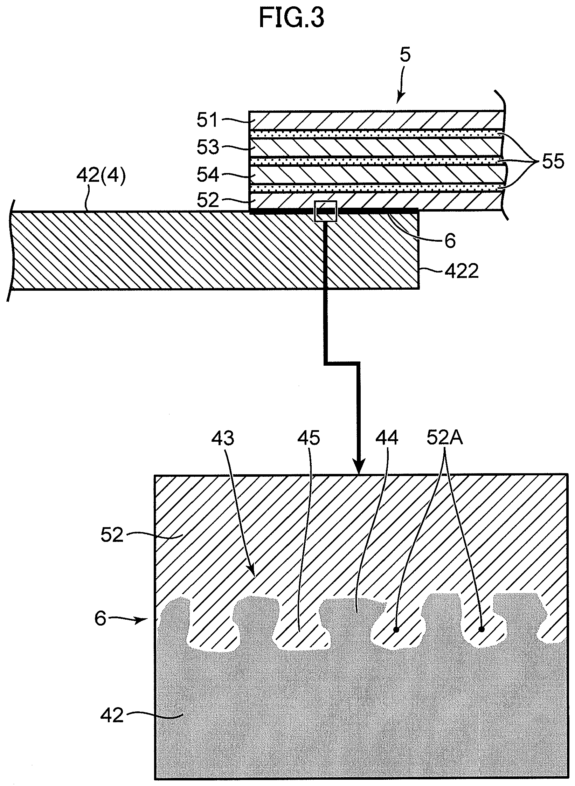

The gas barrier 5 surrounds the heat insulation layer 3 to isolate the heat insulation layer 3 from outside air. More specifically, the gas barrier 5 covers the outer circumferential surface of the heat insulation layer 3 to reduce the entry of outside air into the heat insulation layer 3. The gas barrier 5 may be a metal-resin composite sheet, a resin sheet, or a metal sheet that is air-impermeable. A specific example of an appropriate gas barrier 5 will be described later with reference to FIG. 3.

The gas barrier 5 includes the heat seal joint 6 heat-sealed to the end seal 4. As described above, the end seal 4 covers the terminal end of the heat insulation layer 3 not covered with the gas barrier 5 in the low-temperature fluid pipe 1. The heat seal joint 6 hermetically seals the gas barrier 5 to the cylinder 42 in the end seal 4. The heat seal joint 6 is a joint portion between the material of the gas barrier 5 and the material of the end seal 4 that are directly in contact with each other and joined without a bonding agent such as an adhesive.

The contact portion between the gas barrier 5 and the end seal 4 may have a gap caused by a difference in coefficient of thermal expansion between them. However, the gas barrier 5 and the end seal 4 are heat-sealed by the heat seal joint 6 to maintain airtightness in the contact portion between the gas barrier 5 and the end seal 4 independently of the difference in coefficient of thermal expansion. The heat insulation layer 3 is thus sealed by the outer circumferential surface of the pipe body 2, the end seal 4, and the gas barrier 5. This reduces the entry of outside air into the heat insulation layer 3 over a long period. When the low-temperature fluid carried through the pipe body 2 is liquid hydrogen and air enters the heat insulation layer 3, cold energy from the pipe body 2 may cause air to liquefy. In the present embodiment, the heat insulation layer 3 is sealed, reducing liquefaction of air. This structure also has higher mechanical strength than the structure in which the gas barrier 5 and the end seal 4 are joined with an adhesive.

### Details of Gas Barrier and Heat Seal Joint

FIG. 3 is a sectional view of the heat seal joint 6 between the end seal 4 and the gas barrier 5, with an enlarged sectional view of the heat seal joint 6. The gas barrier 5 includes a resin layer on the surface layer of the heat seal joint 6. The resin layer is heat-sealed to the end seal 4. The gas barrier 5 includes a flexible laminated film of aluminum foil and resin films. More specifically, the gas barrier 5 includes, for example, an outer resin layer 51, an inner resin layer 52, a first aluminum foil layer 53, a second aluminum foil layer 54, and bonding layers 55. The numbers of resin layers and aluminum foil layers in the gas barrier 5 described above are mere examples.

When the gas barrier 5 is attached to the heat insulation layer 3, the outer resin layer 51 is the outermost layer of the gas barrier 5. With the gas barrier 5 attached to the heat insulation layer 3, being outer refers to the direction from the heat insulation layer 3 toward the gas barrier layers parallel to the radial direction of the low-temperature fluid pipe 1, whereas being inner refers to the opposite direction parallel to the radial direction. The outer resin layer 51 serves as a protective layer to protect, for example, the heat insulation layer 3 from an external force. The outer resin layer 51 may be a resin film of, for example, nylon or polyethylene terephthalate. When the outer resin layer 51 is to have fire-resistant properties, the outer resin layer 51 may be formed from engineering plastic. When the outer resin layer 51 is to be heat-sealed, the outer resin layer 51 may be formed from a thermoplastic resin.

When the gas barrier 5 is attached to the heat insulation layer 3, the inner resin layer 52 is the innermost layer of the gas barrier 5. The inner resin layer 52 is in contact with the cylinder 42 in the end seal 4 and is heat-sealed to form the heat seal joint 6. The inner resin layer 52 may be a thermoplastic resin film of, for example, polyethylene or polypropylene. When the inner resin layer 52 is to have fire-resistant properties, the inner resin layer 52 may be formed from engineering plastic.

The first aluminum foil layer 53 and the second aluminum foil layer 54 are located between the outer resin layer 51 and the inner resin layer 52. The first aluminum foil layer 53 and the second aluminum foil layer 54 serve as gas barrier layers to reduce the entry of outside air into the heat insulation layer 3. The gas barrier 5 may include a single gas barrier layer, without one of the first aluminum foil layer 53 or the second aluminum foil layer 54. However, the gas barrier layer may include two layers as in the present embodiment or three or more layers to provide redundancy. The gas barrier layers in the gas barrier 5 may include metal foil other than aluminum foil. The gas barrier layers in the gas barrier 5 may be resin films with high gas barrier performance. The resin films may be, for example, vinyl alcohol resin films formed from, for example, an ethylene-vinyl alcohol copolymer (EVOH).

The bonding layers 55 are respectively located between the outer resin layer 51 and the first aluminum foil layer 53, between the first aluminum foil layer 53 and the second aluminum foil layer 54, and between the second aluminum foil layer 54 and the inner resin layer 52 to bond these adjacent layers. Each bonding layer 55 may be an adhesive or a thermoplastic resin film for heat sealing. For the bonding layer 55 that is a thermoplastic resin film, the thermoplastic resin film is heated to a temperature above the melting point of its resin material and heat-sealed to the adjacent layers to fabricate the gas barrier 5. Heat sealing in the present embodiment includes melting at least one of two joint portions by heating, and placing the joint portions in contact with each other. The joint portions in contact with each other are then cooled to join them. The joint portions may be pressed against each other to place them in contact with each other.

The gas barrier 5 including a flexible laminated film of metal foil and resin films as in the present embodiment can produce the advantageous effects described below. The heat seal joint 6 that is heat-sealed can join the gas barrier 5 to the end seal 4. In the present embodiment, the gas barrier 5 can be heat-sealed to the end seal 4 simply by applying heat higher than or equal to the melting point of the resin contained in the inner resin layer 52. This substantially facilitates the fabrication. In addition, the gas barrier 5 and the end seal 4 that are heat-sealed allow their joint portions to be airtight. The flexible laminated film of metal foil and resin films is relatively lightweight. The low-temperature fluid pipe 1 can thus be lighter than, for example, a vacuum insulated multi-layer pipe.

The flexible film also provides durability and high maintainability. When the low-temperature fluid carried through the pipe body 2, the temperature decreases inside the gas barrier 5, causing condensation of air and creating a negative pressure. In the present embodiment, the heat seal joint 6 achieves a high level of airtightness that easily creates a negative pressure inside the gas barrier 5. The negative pressure applies stress that draws the gas barrier 5 radially inward. The gas barrier 5 having a relatively rigid structure may break under this stress. However, the gas barrier 5 including the flexible film described above can elastically deform to accommodate the stress caused by the negative pressure. The gas barrier 5 is thus highly durable.

The gas barrier 5 including the flexible film facilitates detection of defects such as pinholes or cracks in the gas barrier 5. As described above, when the low-temperature fluid carried through the pipe body 2, the negative pressure causes the gas barrier 5 to deform. However, the defects described above break the airtightness of the gas barrier 5, not allowing the gas barrier 5 to deform. In other words, the gas barrier 5 that does not deform under negative pressure is likely to have some defect. This thus improves maintainability.

### Formation of Rough Surface Layer on End Seal

FIG. 3 is an enlarged view of the heat seal joint 6 in an appropriate state. The end seal 4 includes, in a portion of the end seal 4 facing the heat seal joint 6, a rough surface layer 43 with a roughened surface. Although the portion of the end seal 4 facing the heat seal joint 6 may be a smooth surface, the rough surface layer 43 at the heat seal joint 6 can further improve the joint strength between the end seal 4 and the gas barrier 5 and the airtightness of the heat seal joint 6.

The rough surface layer 43 is located on the outer circumferential surface of the cylinder 42 in a portion adjacent to the second end 422 of the cylinder 42 and includes protrusions 44 and recesses 45 that are microscopic. Each recess 45 may be narrower near the opening and wider near the bottom, having a wedge-shaped cross section. Each recess 45 receives a molten resin 52A of the inner resin layer 52 melted by heat sealing. With the characteristics described above, the molten resin 52A and the recess 45 engaged with each other produces an anchoring effect that allows the rough surface layer 43 and the heat seal joint 6 to be joined firmly.

The rough surface layer 43 may be formed with any method. For example, the rough surface layer 43 can be formed by chemical etching using a chemical solution, shot blasting that sprays fine particles, or sanding with a roughening tool. When the chemical etching described above is performed on the end seal 4 formed from an iron-based material, the portion adjacent to the second end 422 of the cylinder 42 is immersed in a phosphate-based chemical solution for a predetermined time.

### Heat Transfer Path in End Seal

The end seal 4 covers the heat insulation layer 3 in the area adjacent to the layer end 31 that is exposed from the gas barrier 5. The end seal 4 reduces liquefaction of air caused by outside air entering the heat insulation layer 3. In addition to this effect, the end seal 4 in the present embodiment has a distinctive shape to reduce the heat transfer from the pipe body 2 to the gas barrier 5 and the entry of heat from the gas barrier 5 into the pipe body 2.

The end seal 4 covers the exposed portion of the heat insulation layer 3 as described above, connecting the pipe body 2 and the gas barrier 5. The end seal 4 can thus serve as a heat transfer path between the pipe body 2 and the gas barrier 5. In other words, cold energy in the pipe body 2 carrying liquid hydrogen can be transferred to the gas barrier 5 through the end seal 4. In this case, the temperature of the heat seal joint 6 between the end seal 4 and the gas barrier 5 decreases, possibly causing separation of the gas barrier 5. In contrast, the gas barrier 5 exposed to outside air can be a heat source that allows heat to enter from the gas barrier 5 into the pipe body 2 through the end seal 4. In this case, the liquid hydrogen in the pipe body 2 may generate a boil-off gas.

As shown in FIG. 1, the end seal 4 includes the disk-shaped plate 41 and the cylinder 42 extending in the pipe axis direction AX of the pipe body 2. FIG. 1 shows a heat transfer path HP of the end seal 4. The end seal 4 includes the cylinder 42 as well as the plate 41. The heat transfer path HP thus includes a portion extending in the pipe axis direction AX. In other words, the heat transfer path HP in this structure is longer by the length of the cylinder 42 than the structure in which the end seal 4 includes a portion corresponding to the plate 41 alone. More specifically, the low-temperature fluid pipe 1 according to one or more embodiments of the present disclosure has, to extend the heat transfer path HP, the layer end 31 of the heat insulation layer 3 protruding from the edge 5E of the gas barrier 5 in the pipe axis direction AX and includes the cylinder 42 in the end seal 4 to cover the protruded portion. The low-temperature fluid pipe 1 according to one or more embodiments of the present disclosure with the extended heat transfer path HP as described above is less likely to transfer cold energy in the pipe body 2 to the gas barrier 5. This reduces the separation of the gas barrier 5 when the heat seal joint 6 is cooled. This also reduces the entry of heat from the gas barrier 5 into the pipe body 2.

In the present embodiment, the cylinder 42 is included in the end seal 4 to extend the heat transfer path HP. In place of the cylinder 42 with a flat cylindrical surface, a bellows-shaped cylinder or a cylinder with continuous rectangular irregularities in its cross section may be used to extend the heat transfer path HP of the low-temperature fluid pipe 1.

### Depressurization of Heat Insulation Layer

In the present embodiment, the heat insulation layer 3 is covered with the gas barrier 5, the plate 41 in the end seal 4 is welded to the pipe body 2, and the second end 422 of the cylinder 42 is joined to the gas barrier 5 with the heat seal joint 6. The heat insulation layer 3 is thus located in a space sealed by the outer circumferential surface of the pipe body 2, the end seal 4, and the gas barrier 5. In other words, the heat insulation layer 3 is located in a highly airtight space. The space for the heat insulation layer 3 may thus be depressurized.

The space for the heat insulation layer 3 is depressurized to further improve the insulating effect of the heat insulation layer 3. When the end seal 4 and the gas barrier 5 are joined with an adhesive, evacuating the space for the heat insulation layer for depressurization may cause outgassing of the adhesive. However, the end seal 4 and the gas barrier 5 are joined together with the heat seal joint 6 in the present embodiment, which causes no outgassing.

### Fabrication Processes of Gas Barrier

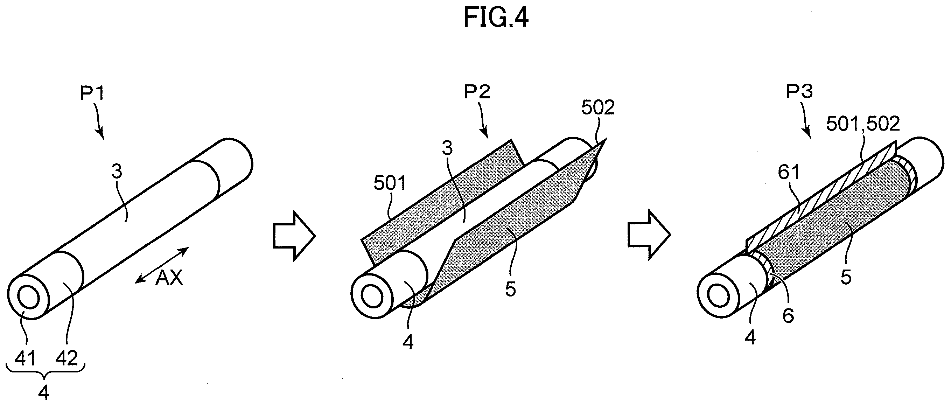

FIG. 4 is a perspective view illustrating an example of fabrication processes of the gas barrier 5. The fabrication processes include steps P1 to P3 performed sequentially. In step P1, the heat insulation layer 3 is placed over the pipe body 2, and the end seal 4 is attached to the layer end 31 of the heat insulation layer 3. In step P2, a sheet-like gas barrier 5 is prepared. The gas barrier 5 is sized to circumferentially cover the exposed heat insulation layer 3. The gas barrier 5 is wound around the heat insulation layer 3 to have its end portion in the pipe axis direction AX overlapping part of the cylinder 42 in the end seal 4.

In step P3, the gas barrier 5 is heat-sealed. A first end 501 and a second end 502 that are the circumferential ends of the gas barrier 5 overlap each other to form an overlap. The overlap is heated to heat-seal the inner resin layer 52 shown in FIG. 3, or more specifically, heat-seal the first end 501 and the second end 502 of the inner resin layer 52. This heat sealing forms an axial heat seal joint 61 extending in the pipe axis direction AX in the gas barrier 5. Instead of heat-sealing the abutting ends of the inner resin layer 52, one of the first end 501 or the second end 502 of the inner resin layer 52 may be heat-sealed to the other of the first end 501 or the second end 502 of the outer resin layer 51. In other words, the gas barrier 5 may be wound around the heat insulation layer 3 to have the first end 501 and the second end 502 overlapping each other in the radial direction. The overlap between the first end 501 and the second end 502 may then be heat-sealed. As described above, the end of the gas barrier 5 in the pipe axis direction AX is heat-sealed to the end seal 4 to form the heat seal joint 6 extending in the circumferential direction. The circumferential heat seal joint 6 and the axial heat seal joint 61 improve the airtightness of the gas barrier 5.

In step P3, the first end 501 and the second end 502 of the gas barrier 5 may be heat-sealed first to cause the gas barrier 5 to form a cylinder that is then placed over the heat insulation layer 3. When the heat insulation layer 3 is covered with the gas barrier 5, air may enter between the outer circumferential surface of the heat insulation layer 3 and the inner circumferential surface of the gas barrier 5. In step P3, the air that has entered between the heat insulation layer 3 and the gas barrier 5 may be vacuumed out before heat-sealing the gas barrier 5 for airtightness. In this case, portions of the circumferential heat seal joint 6 and the axial heat seal joint 61 may remain unsealed to vacuum out air through these unsealed portions. The unsealed portions may then be heat-sealed for airtightness of the gas barrier 5. For the heat insulation layer 3 elongated in the pipe axis direction AX, multiple sheet-like gas barriers 5 may be arranged in the pipe axis direction AX and connected by thermal bonding.

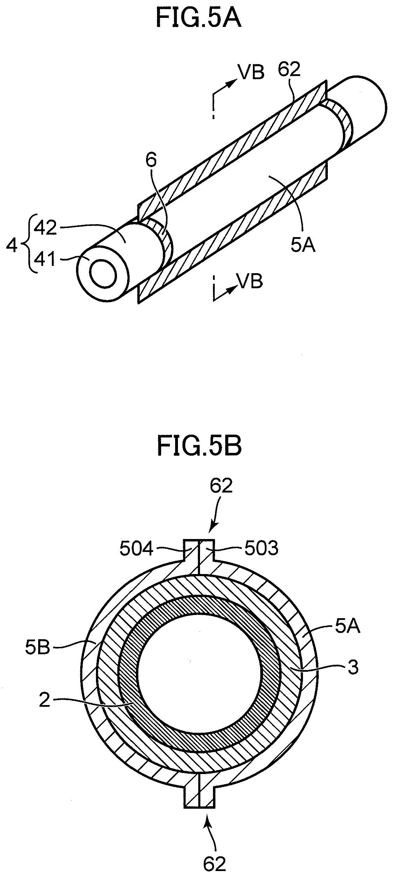

FIG. 5A is a perspective view illustrating another example of fabrication processes of the gas barrier 5. FIG. 5B is a sectional view taken along line VB-VB in FIG. 5A. The figures show an advantageous example for the pipe body 2 with a large diameter. The gas barrier 5 covering the heat insulation layer 3 includes a sheet-like first gas barrier 5A and a sheet-like second gas barrier 5B. The first gas barrier 5A covers a half of the circumferential surface of the heat insulation layer 3, and the second gas barrier 5B covers the other half of the circumferential surface of the heat insulation layer 3.

In the example in FIG. 5A, two circumferential ends 503 of the first gas barrier 5A respectively abut against two circumferential ends 504 of the second gas barrier 5B and are heat-sealed to form a pair of axial heat seal joints 62. The axial heat seal joints 62 may remain protruding radially outward, or may be bent along the circumferential surface of the gas barrier 5 to be heat-sealed or taped. The heat insulation layer 3 may be covered with three or more gas barrier sheets that are heat-sealed with adjacent gas barrier sheets. The pipe body 2 with a large diameter increases the outer diameter of the heat insulation layer 3. In this case, the heat insulation layer 3 may be difficult to wrap with a single sheet of gas barrier. The heat insulation layer 3 is wrapped with multiple sheets of gas barrier to facilitate fabrication of the gas barrier 5.

### Second Embodiment

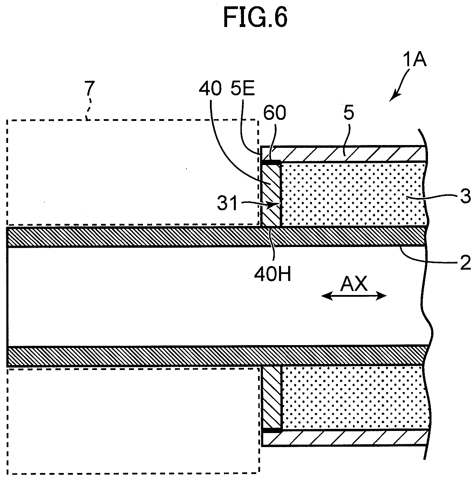

FIG. 6 is a sectional view of a low-temperature fluid pipe 1A according to a second embodiment. The low-temperature fluid pipe 1A includes a pipe body 2, a heat insulation layer 3, an end seal 40, and a gas barrier 5. The second embodiment differs from the first embodiment in that the end seal 40 includes no component corresponding to the cylinder 42 extending in the pipe axis direction AX.

The end seal 40 is a disk with a hole 40H through which the pipe body 2 extends. The end seal 40 extends radially outward from the pipe body 2. The pipe body 2 extends through the hole 40H, and the periphery of the hole 40H is welded to the pipe body 2. The end seal 40 has the outer surface in the pipe axis direction AX flush with an edge 5E of the gas barrier 5. The end seal 40 has the inner surface in the pipe axis direction AX in contact with a layer end 31 of the heat insulation layer 3. The pipe body 2 has its exposed portion covered with a heat insulating cover 7.

In the second embodiment, the outer peripheral edge of the end seal 40 is heat-sealed to the gas barrier 5. The gas barrier 5 includes, on the inner surface of the gas barrier 5 adjacent to the edge 5E, a heat seal joint 60 heat-sealed to the end seal 40. The heat seal joint 60 has substantially the same structure as the heat seal joint in the first embodiment. An inner resin layer 52 in the gas barrier 5 is heat-sealed to the outer peripheral edge of the end seal 40 to form the heat seal joint 60. The welding of the hole 40H and the forming of the heat seal joint 60 improve the sealing performance of the end seal 40 to seal the space for the heat insulation layer 3. This reduces the entry of outside air into the heat insulation layer 3. The end seal 40 may include, on its outer peripheral edge, the rough surface layer 43 illustrated in FIG. 3.

### Third Embodiment

FIG. 7 is a sectional view of a low-temperature fluid pipe 1B according to a third embodiment. The low-temperature fluid pipe 1B includes inner pipes 21 each as a pipe body, a heat insulation layer 30, outer pipes 22 each as a vacuum jacket, and a gas barrier 50. Each inner pipe 21 is a metal pipe that carries a low-temperature fluid. Each outer pipe 22 is coaxial with the inner pipe 21 and covers the inner pipe 21 with a space in the radial direction between the inner pipe 21 and the outer pipe 22. The inner pipe 21 and the outer pipe 22 form a vacuum jacketed pipe 20. The space between the inner pipe 21 and the outer pipe 22 is depressurized to be a vacuum insulation space.

The low-temperature fluid pipe 1B includes an exposed portion PA in which the inner pipe 21 is exposed without the outer pipes 22. The exposed portion PA is, for example, a portion of an intermediate connecting portion at which the inner pipes 21 of a pair of vacuum jacketed pipes 20 are connected. At the intermediate connecting portion, the outer pipes 22 are removed to join the inner pipes 21 by, for example, welding. Thus, the inner pipes 21 are exposed for a predetermined length in the pipe axis direction AX. A seal 221 is attached to an end 22E of each outer pipe 22 to maintain airtightness between the inner pipe 21 and the outer pipe 22.

The heat insulation layer 30 covers the exposed portion PA of the inner pipes 21 and portions near the ends 22E of the outer pipes 22. The heat insulation layer 30 mainly insulates the exposed portion PA of the inner pipes 21. Each outer pipe 22 thus covers the outer circumference of the corresponding inner pipe 21 in portions other than the exposed portion PA with the depressurized space being between the outer pipe 22 and the inner pipe 21 to insulate the inner pipe 21. The heat insulation layer 30 may be formed by, for example, wrapping a sheet-like insulator around the exposed portion PA, allowing the insulator to extend over the ends 22E of the pair of outer pipes 22 facing each other. In the third embodiment, the seals 221 adjacent to the heat insulation layer 30 in the pipe axis direction AX and the ends 22E of the outer pipes 22 adjacent to the heat insulation layer 30 in the radial direction serve as end seals 4A sealing the layer ends of the heat insulation layer 30, as indicated by the dotted lines in FIG. 7.

The gas barrier 50 covers the outer circumference of the heat insulation layer 30 to isolate the heat insulation layer 30 from outside air. The gas barrier 50 may be a metal-resin composite sheet, a resin sheet, or a metal sheet that is air-impermeable. For example, the gas barrier 50 may be the laminated film of aluminum foil and resin films illustrated in FIG. 3. The gas barrier 50 includes heat seal joints 63 heat-sealed to the ends 22E of the outer pipes 22 as the end seals 4A. Each heat seal joint 63 is located at an end 56 of the gas barrier 50 in the pipe axis direction AX. The heat seal joint 63 can be formed by heat-sealing the resin layer of the gas barrier 50 to the surface of the outer pipe 22. A portion of each end seal 4A facing the corresponding heat seal joint 63 may be processed to be the rough surface layer 43 illustrated in FIG. 3.

The gas barrier 50 including the heat seal joints 63 surrounds the heat insulation layer 30 to reduce the entry of outside air into the heat insulation layer 30. Each contact portion between the gas barrier 50 and the outer pipe 22 may have a gap caused by a difference in coefficient of thermal expansion between them. However, the heat seal joints 63 heat-seal the gas barrier 50 to the outer pipes 22. Thus, airtightness is maintained in each contact portion between the gas barrier 50 and the outer pipe 22 having a difference in coefficient of thermal expansion. This reduces the entry of outside air into the heat insulation layer 30 over a long period. This structure also has higher mechanical strength than the structure in which the gas barrier 50 and the outer pipes 22 are joined with an adhesive.

### Fourth Embodiment

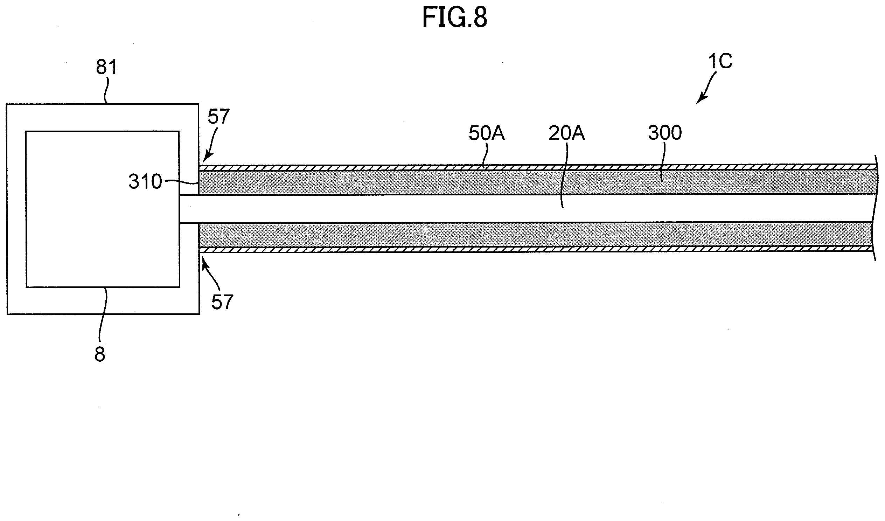

FIG. 8 is a sectional view of a low-temperature fluid pipe 1C according to a fourth embodiment. The low-temperature fluid pipe 1C is connected to a piping device 8 and includes a pipe body 20A, a heat insulation layer 300, and a gas barrier 50A. The pipe body 20A is a metal pipe that carries a low-temperature fluid. The heat insulation layer 300 covers the outer circumference of the pipe body 20A to insulate the pipe body 20A. The gas barrier 50A covers the outer circumference of the heat insulation layer 300 to isolate the heat insulation layer 300 from outside air.

The piping device 8 is, for example, a pump or a compressor that feeds liquid hydrogen to the pipe body 20A or a heat exchanger that uses liquid hydrogen as a heating medium. The piping device 8 is covered with a vacuum jacket 81 for cooling or for reducing liquefaction of air. The gas barrier 50A has an edge 57 heat-sealed to the vacuum jacket 81. For example, the gas barrier 50A can be a laminated film of aluminum foil and resin films having the edge 57 heat-sealed to the vacuum jacket 81.

In the fourth embodiment, a portion of the vacuum jacket 81 in contact with a layer end 310 of the heat insulation layer 300 serves as an end seal. The gas barrier 50A has the edge 57 heat-sealed to the vacuum jacket 81 for airtightness of the heat insulation layer 300. Overview of Present Disclosure

The embodiments described in detail above include the aspects of the disclosure described below.

A low-temperature fluid pipe according to a first aspect of the present disclosure includes a pipe body that is formed from a metal and carries a low-temperature fluid, an end seal protruding radially outward from an outer peripheral surface of the pipe body, a heat insulation layer surrounding the pipe body and including a layer end facing the end seal, and a gas barrier surrounding the heat insulation layer and including a heat seal joint heat-sealed to the end seal.

In the first aspect, the heat insulation layer is covered with the gas barrier, and the layer end is covered with the end seal. This reduces the entry of outside air into the heat insulation layer. The contact portion between the end seal and the gas barrier may have a gap caused by a difference in coefficient of thermal expansion between them. However, the gas barrier includes the heat seal joint heat-sealed to the end seal in the above aspect. Thus, airtightness is maintained in the contact portion between the end seal and the gas barrier having a difference in coefficient of thermal expansion. This reduces the entry of outside air over a long period. This structure also has higher mechanical strength than the structure in which the end seal and the gas barrier are joined with an adhesive.

A low-temperature fluid pipe according to a second aspect is the low-temperature fluid pipe according to the first aspect in which the gas barrier includes a resin layer at least on a surface layer of the heat seal joint. The resin layer is heat-sealed to the end seal.

In the second aspect, the resin layer in the gas barrier can be melted to heat-seal the gas barrier to the end seal. The heat seal joint is thus fabricated more easily than, for example, by welding.

A low-temperature fluid pipe according to a third aspect is the low-temperature fluid pipe according to the first aspect or the second aspect in which the end seal includes, in a portion of the end seal facing the heat seal joint, a rough surface layer. The rough surface layer is a portion of a surface of the end seal being roughened.

In the third aspect, the rough surface layer produces an anchoring effect that further improves the joint strength between the end seal and the gas barrier as well as the airtightness of the heat seal joint.

A low-temperature fluid pipe according to a fourth aspect is the low-temperature fluid pipe according to any one of the first to third aspects in which the heat insulation layer is located in a space depressurized and sealed by the outer circumferential surface of the pipe body, the end seal, and the gas barrier.

In the fourth aspect, the space for the heat insulation layer is depressurized, improving the effect of insulation on the pipe. When the end seal and the gas barrier are joined with an adhesive, evacuating the space for the heat insulation layer for depressurization may cause outgassing of the adhesive. However, the end seal and the gas barrier are joined together by heat sealing in this aspect, causing no outgassing.

A low-temperature fluid pipe according to a fifth aspect is the low-temperature fluid pipe according to any one of the first to fourth aspects in which the end seal includes an end seal plate and an end seal cylinder. The end seal plate has a hole through which the pipe body extends. The end seal plate extends radially outward from the pipe body and is in contact with the layer end of the heat insulation layer. The end seal cylinder surrounds the pipe body and includes a first end portion connected to the end seal plate and a second end portion heat-sealed to the heat seal joint in the gas barrier.

In the fifth aspect, the end seal cylinder in addition to the end seal plate is between the pipe body and the gas barrier. Thus, the heat transfer path between the pipe body and the gas barrier is extended, reducing the likelihood that cold energy in the pipe body is transferred to the gas barrier. This reduces the separation of the gas barrier when the heat seal joint is cooled. This also reduces the entry of heat from the gas barrier, which is exposed to outside air, into the pipe body.

A low-temperature fluid pipe according to a sixth aspect is the low-temperature fluid pipe according to any one of the first to fifth aspects in which the low-temperature fluid carried through the pipe body is liquid hydrogen.

Liquid hydrogen contains cold energy that causes air to liquefy. When the sealing performance of the end seal is lowered, the outside air entering the heat insulation layer comes into contact with the pipe body and liquefies. In the sixth aspect, the heat seal joint maintains the sealing performance of the end seal, reducing liquefaction of air.

A low-temperature fluid pipe according to a seventh aspect of the present disclosure includes a pipe body that is formed from a metal and carries a low-temperature fluid, a heat insulation layer covering an outer circumference of a first portion of the pipe body, a vacuum jacket covering an outer circumference of a second portion of the pipe body different from the first portion of the pipe body with a depressurized space being between the pipe body and the vacuum jacket, and a gas barrier covering an outer circumference of the heat insulation layer and including a heat seal joint heat-sealed to the vacuum jacket.

In the seventh aspect, the gas barrier including the heat seal joint between the gas barrier and the vacuum jacket covers the heat insulation layer, reducing the entry of outside air into the heat insulation layer. The contact portion between the gas barrier and the vacuum jacket may have a gap caused by a difference in coefficient of thermal expansion between them. However, the gas barrier includes the heat seal joint heat-sealed to the vacuum jacket in the above aspect. Thus, airtightness is maintained in the contact portion between the gas barrier and the vacuum jacket having a difference in coefficient of thermal expansion. This reduces the entry of outside air over a long period. This structure also has higher mechanical strength than the structure in which the gas barrier and the vacuum jacket are joined with an adhesive.

A low-temperature fluid pipe according to an eighth aspect is the low-temperature fluid pipe according to the seventh aspect in which the gas barrier includes a resin layer at least on a surface layer of the heat seal joint. The resin layer is heat-sealed to the vacuum jacket.

In the eighth aspect, the resin layer in the gas barrier can be melted to heat-seal the gas barrier to the vacuum jacket. The heat seal joint is thus fabricated more easily than, for example, by welding.

A low-temperature fluid pipe according to a ninth aspect is the low-temperature fluid pipe according to the seventh aspect or the eighth aspect in which the end seal includes, in a portion of the end seal facing the heat seal joint, a rough surface layer. The rough surface layer is a portion of a surface of the end seal being roughened.

In the ninth aspect, the rough surface layer produces an anchoring effect that further improves the joint strength between the gas barrier and the vacuum jacket as well as the airtightness of the heat seal joint.

## Claims

1. A low-temperature fluid pipe, comprising:
a pipe body comprising a metal and carrying a low-temperature fluid;
an end seal protruding radially outward from an outer peripheral surface of the pipe body;
a heat insulation layer surrounding the pipe body and including a layer end facing the end seal; and
a gas barrier surrounding the heat insulation layer and including a heat seal joint heat-sealed to the end seal.

2. The low-temperature fluid pipe according to claim 1, wherein
the gas barrier includes a resin layer at least on a surface layer of the heat seal joint, and
the resin layer is heat-sealed to the end seal.

3. The low-temperature fluid pipe according to claim 1, wherein
the end seal includes, in a portion of the end seal facing the heat seal joint, a rough surface layer, and the rough surface layer is a portion of a surface of the end seal being roughened.

4. The low-temperature fluid pipe according to claim 1, wherein
the heat insulation layer is located in a space depressurized and sealed by the outer circumferential surface of the pipe body, the end seal, and the gas barrier.

5. The low-temperature fluid pipe according to any one of claims 1 to 4, wherein
the end seal includes
an end seal plate having a hole through which the pipe body extends, the end seal plate extending radially outward from the pipe body and being in contact with the layer end of the heat insulation layer, and
an end seal cylinder surrounding the pipe body, the end seal cylinder including a first end portion connected to the end seal plate and a second end portion heat-sealed to the heat seal joint in the gas barrier.

6. The low-temperature fluid pipe according to claim 1, wherein
the low-temperature fluid carried through the pipe body is liquid hydrogen.
